# EUROPÄISCHE PATENTSCHRIFT

(11) **EP 3 487 703 B1**
(45) Veröffentlichungstag und Bekanntmachung des Hinweises auf die Patenterteilung: **26.03.2025**
(21) Anmeldenummer: 17748398.9
(22) Anmeldetag: 21.07.2017
(51) Int. Cl.: B32B 37/18, B32B 38/06, B63B 32/57

(54) **SURFBRETT UND VERFAHREN ZU DESSEN HERSTELLUNG**
SURFBOARD AND METHOD FOR PRODUCING SAME
PLANCHE DE SURF ET SON PROCÉDÉ DE FABRICATION

(30) Priorität: 22.07.2016 CH 9522016
(43) Veröffentlichungstag der Anmeldung: 29.05.2019
(73) Patentinhaber: Von Osterhausen, Thilo, 66131 Saarbrücken (DE)
(72) Erfinder: Von Osterhausen, Thilo, 66131 Saarbrücken (DE)
(74) Vertreter: Patentanwälte Bernhardt / Wolff Partnerschaft mbB
(86) Internationale Anmeldenummer: PCT/EP2017/000892
(87) Internationale Veröffentlichungsnummer: WO 2018/015021

(56) Entgegenhaltungen:
- WO-A1-2005/012074
- FR-A1- 2 841 146
- JP-A- 2003 306 195
- US-A- 4 188 428
- US-A1- 2003 224 675

## Beschreibung

### Stand der Technik

Die vorliegende Erfindung betrifft eine Vorrichtung, insbesondere ein Surfbrett zum Standup paddeling, Wellenreiten, Windsurfen und dergleichen und ein Verfahren zur Herstellung einer diesbezüglichen Vorrichtung.

Aus dem Stand der Technik sind Vorrichtungen, insbesondere Surfbretter zum Wellenreiten, Stand-up paddeling, sogenannte SUPs, und auch Windsurfen bekannt, die aus einem Körper aus geschäumtem Kunststoff bestehen, der zunächst aus einem Klotz mittels mechanischer Bearbeitung in seine spätere Form gebracht wird und anschließend mit einem mit einer Matrix getränkten Fasergewebe überzogen wird. Hierbei kann vor dem Auflegen des getränkten Fasergewebes die Oberfläche des Körpers zusätzlich mit der Matrix getränkt sein, so dass genügend Matrix zur Verfügung steht, dass das Fasergewebe nach dem Aushärten vollflächig mit der Matrix benetzt ist. In der Regel besteht die Matrix aus Polyesterharzen, Epoxidharzen oder auch Polyurethanharzen. In der Regel verhalten sich die Harze in ausgehärtetem Zustand ähnlich wie Glas, sind also hart und spröde. Durch die Einlagerung eines Fasergewebes, wie beispielsweise Glasfasergewebe, in denen die Glasfäden in einer Ebene eine vorbestimmte Ausrichtung aufweisen oder Glasfasermatten, bei denen die Glasfäden in einer Ebene keine vorbestimmte Ausrichtung aufweisen, in die Matrix, wird eine hohe Bruchdehnung und eine elastische Energieaufnahme erzeugt. Je höher der Glasfaseranteil in einem Laminat ist, desto besser sind diese Eigenschaften. Die Körper sind meist aus extrudiertem Polystyrol (XPS) oder expandiertem Polystyrol (EPS) oder auch Polyurethanschaum hergestellt, die sehr leicht sind, jedoch keine hohen Biegebelastungen aufzunehmen vermögen.

Während des Betriebs ist ein Surfbrett hohen, teilweise schlagartigen Belastungen ausgesetzt, die zu einem Biegen des Surfbretts in allen Richtungen, insbesondere quer zu seiner sich in Längsrichtung des Surfbretts erstreckenden Längsachse bis etwa 30 cm führen können. Es hat sich gezeigt, dass Surfbretter bekannter Art diesen Belastungen teilweise nicht standhalten und es zu einer Ablösung des Laminats von dem Körper kommen kann. Um eine erhöhte Biegesteifigkeit des Surfbretts zu erzeugen, sind in der Vergangenheit eine entsprechende Anzahl Laminate/Laminatschichten übereinander gelegt worden. Hierdurch wird jedoch einerseits das Gewicht des Surfbretts erhöht und andererseits eine Elastizität des Surfbretts beschränkt, die jedoch an vorbestimmten Bereichen, insbesondere an seinen Enden, nämlich am Bug (nose) und am Heck (tail), durchaus gewünscht ist.

Die WO 2005/012074 beschreibt eine Vorrichtung, insbesondere ein Sportgerät zum Wellenreiten oder dergleichen, mit einem Grundkörper aus Schaumstoff, der wenigstens eine Laminatbeschichtung aus einem Gewebelaminat und einer Bettungsmasse aufweist, wobei eine Zwischenschicht zwischen dem Grundkörper und der Laminatschicht angeordnet ist.

Die US 4,188,428 beschreibt ein leichtgewichtiges Brettelement mit einem leichtgewichtigen Kern aus festem Kunststoffschaum und Deckschichten aus glasfaserverstärktem Harz. Die obere und die untere Oberfläche des Kernes sind mit nahe beieinander liegenden Vertiefungen in Form eines Gitters versehen, um die Steife und Härte der Oberfläche zu verstärken.

### Zusammenfassung der Erfindung

Es kann daher ein Bedürfnis bestehen, eine Ablösung einer Laminatschicht von einem Körper aus geschäumtem Kunststoff zu verhindern und die Biegelinie an die tatsächlich auftretenden Belastungen anpassen zu können.

Dieses Bedürfnis kann durch einen Gegenstand der unabhängigen Ansprüche befriedigt werden. Vorteilhafte Ausgestaltungen ergeben sich aus den Gegenständen der abhängigen Ansprüche.

Erfindungsgemäß wird eine Vorrichtung, insbesondere Surfbrett zum Stand-up paddeling, Wellenreiten, Windsurfen und dergleichen, mit einem Körper aus geschäumtem Kunststoff vorgeschlagen, wobei der Körper von einer Oberfläche begrenzt ist, an der eine Fasermatte unlösbar verbunden ist. Die Oberfläche weist mindestens in einem Teilbereich mindestens eine umlaufende rillenförmige Vertiefung auf, durch die eine vorbestimmte Teilfläche der Oberfläche begrenzt ist, wobei die rillenförmige Vertiefung durch Erwärmen der Oberfläche und Anpressen einer Matrize über die Fasermatte in die erwärmte Oberfläche des Körpers ausgebildet ist, so dass die Fasermatte an der umlaufenden rillenförmigen Vertiefung vollflächig anliegt und zumindest teilweise durch die Fasermatte hindurch geschäumter Kunststoff getreten ist.

Besonders geeignet sind Kunststoffe, die ein geringes spezifisches Gewichtaufweisen. Zur zusätzlichen Reduktion des Gewichts sind die Kunststoffe geschäumt. Die Schäumung des Kunststoffs kann chemisch oder physikalisch erfolgen. Gerade die Einbettung von Gas wie beispielsweise Luft, Stickstoff oder auch Kohlendioxid in den Kunststoff können das Gewicht reduzieren. Die Kunststoffe können expandierte oder extrudierte Kunststoffe wie beispielsweise Polystyrol oder Polyurethan sein. Die Kunststoffe können ganz oder teilweise aus Erdöl und/oder nachwachsenden Rohstoffen gewonnen sein. Der Körper kann aus einer Lage Kunststoff oder auch aus mehreren Lagen Kunststoff, die miteinander durch Kleben oder Schweißen verbunden sein können, hergestellt sein. Durch eine geschickte Anordnung von einzelnen Lagen kann der Körper so gestaltet sein, dass er eine oder mehrere Kammern umschließt, die mit Gas, vorzugsweise mit Luft, gefüllt sind. Hierdurch kann das Gewicht des Körpers nochmals gegenüber einem Körper reduziert sein, der keine gasgefüllten Kammern aufweist. Auch kann durch geschickte Wahl der einzelnen Lagen aus voneinander verschiedenen Kunststoffen die Biege- und Torsionssteifigkeit der Vorrichtung beeinflusst werden. Auch kann jede einzelne Lage homogen, also aus einem Kunststoffmaterial, oder heterogen, also aus unterschiedlichen Kunststoffmaterialien, gefertigt sein. Beispielsweise können in eine Lage aus möglicherweise geschäumtem Kunststoff zur Veränderung von dessen Festigkeit Fasern oder Stäbe aus ungeschäumtem Kunststoff eingebettet sein, wobei dieser Kunststoff gleich wie der geschäumte Kunststoff oder verschieden von dem geschäumten Kunststoff sein kann. Ferner kann eine Lage auch in sich inhomogen sein, also der Kunststoff an verschiedenen Orten eine unterschiedliche spezifische Dichte aufweisen. Fasern einer Fasermatte können aus Glas, Glasfilamenten, Fieberglas, Kohlenstoff, Aramid, Dyneema, Polyethylen, Basalt, Texalium, Parabean oder aus nachwachsenden Rohstoffen wie Hanf, Flachs, Bambus, Jute oder Sisal bestehen oder eine Mischung davon sein. Die Fasermatte kann ein Gewebe, ein Gelege, ein Vliesstoff sein oder auch aus Rovings hergestellt sein. Das Gelege kann monoaxial, auch unidirektional genannt, biaxial oder multiaxial sein. Der Vliesstoff ist in jede Richtung leicht biegsam und kann daher besonders geeignet sein, sich entlang der Oberfläche des Körpers, insbesondere in die Vertiefungen, zu erstrecken und damit nicht an dem Übergang von der Vertiefung zu der Teilfläche von der Oberfläche abzustehen. Bewährt hat sich ein Vliesstoff aus Glasfasern mit einem Gewicht von etwa 120 g/m², wobei durchaus auch andere Vliesstoffe mit einem Gewicht zwischen 20 g/m² und 200 g/m² einsetzbar sind. Fasermatten aus Glasfasern werden in der Regel ein Gewicht von etwa 50 g/m² und 480 g/m² haben. Gut verarbeitbar sind Fasermatten aus Aramidfasern mit einem Gewicht von etwa 60 g/m² und 400 g/m². Die umlaufende rillenförmige Vertiefung kann beispielsweise als V-Nut, Rechtecknut oder als Hohlkehle ausgebildet sein. Die Seitenwände der Vertiefung und die Teilflächen werden in der Regel einen Winkel einschließen, der größer als 90° ist, um ein Entfernen des Stempels oder einer Matrize, mit dem die Vertiefung in dem Körper ausgebildet werden kann, zu erleichtern. Die Teilfläche kann plan, einfach gekrümmt oder doppelt gekrümmt sein oder aus einer Mischung hieraus bestehen. Die Matrix kann ungesättigtes Polyesterharz, Epoxidharz, Vinylesterharz oder Polyurethanharz sein. Die genannten Harze können mit Füllstoffen versetzt sein wie beispielsweise Glashohlkugeln, Glasfaserschnipsel, Holzmehl, Talkum, gemahlene Kohlefasern oder Hanffasern, Kreide, Quarzmehl, Baumwollflocken oder Kieselsäuren oder einer Mischung hieraus. Durch die Beimischung der Füllstoffe können die Eigenschaften der Harze für eine bessere Verarbeitbarkeit oder einer verbesserten Haftbarkeit verändert werden. Auch können durch die Beimischung von Füllstoffen die dämpfenden Eigenschaften verändert werden. Ferner können den Harzen auch Farbstoffe beigemischt werden. Der Körper kann brettartig ausgebildet sein. Der Körper kann jedoch auch jede beliebige dreidimensionale Form aufweisen. Hierbei kann der Körper an seiner Oberseite auch Strukturen aufweisen. Diese Strukturen können mikroskopisch und/oder makroskopisch sein. Generell dient der Körper dazu, die Matrix, respektive das Laminat, von der neutralen Faser der Vorrichtung zu beabstanden. Über die Beabstandung des Laminats von der neutralen Faser sowie dem gewählten Aufbau des Körpers kann die Biege- und Torsionsfestigkeit sowie der Flex der Vorrichtung, respektive des Boards, in weiten Bereichen eingestellt werden. Ferner können die für den Körper verwendeten Kunststoffe derart gewählt sein, dass dessen Oberfläche zur Weiterverarbeitung zu einer Vorrichtung aus Verbundwerkstoff geeignet ist, sich also die Oberfläche des Körpers mit der Matrix gegebenenfalls unter Verwendung eines Haftvermittlers verbinden kann.

Durch die umlaufende rillenförmige Vertiefung kann die Oberfläche vergrößert werden, so dass eine Laminatschicht aus mindestens einer entsprechenden Fasermatte und einer Matrix auf einer gegenüber einer Oberfläche ohne Vertiefungen vergrößerten Fläche aufliegen kann. Durch die durch die umlaufende rillenförmige Vertiefung vergrößerte Oberfläche können mehr Adhäsionskräfte wirken, die somit zu einer verbesserten Verbindung der Laminatschicht an den geschäumten Kunststoff des Körpers führen können. Ferner kann die Matrix durch geeignete Maßnahmen derart eingestellt werden, dass sie in den Körper eindringen und somit nach dem Aushärten eine formschlüssige Verbindung zwischen der Laminatschicht und dem Köper bilden kann, welche die Verbindung der Laminatschicht an den Körper verbessern kann. Zusätzlich kann auch durch eine vergrößerte Rauhigkeit die Oberfläche des Körpers vergrößert werden. Die vergrößerte Rauhigkeit kann vorrangig zu einer Vergrößerung der Adhäsionskräfte führen, die ein Ablösen der Laminatschicht von der Oberfläche des Körpers verhindern. Zusätzlich zu den Adhäsionskräften kann es auch zu einem mechanischen Verkeilen der ausgehärteten Matrix in den die Rauhigkeit bildenden Poren. Die umlaufende rillenförmige Vertiefung kann eine Teilfläche der Oberfläche mit einer beliebigen Kontur begrenzen. Durch die umlaufende rillenförmige Vertiefung kann nicht nur die Oberfläche zur Erhöhung der Adhäsionskräfte der Laminatschicht an den Körper erhöht werden, sondern auch die Biegesteifigkeiten um und quer zu der sich in Längserstreckung der Vorrichtung erstreckenden Längsachse. Quer zu der Längsachse können sich eine Querachse und eine Hochachse erstrecken. Hierbei schließen alle Achsen jeweils zueinander einen rechten Winkel ein. Somit kann durch konstante oder variierte Tiefe der umlaufenden rillenförmigen Vertiefung und durch den durch die umlaufende rillenförmige Vertiefung eingeschriebenen Flächeninhalt der Teilfläche die Steifigkeiten gegen Rollen, Stampfen und Gieren zumindest in weiten Bereichen, wenn nicht sogar gänzlich, an die tatsächlich auftretenden Belastungen angepasst werden. Durch die rillenförmigen umlaufenden Vertiefungen in Verbindung mit der Fasermatte, insbesondere einer Fasermatte aus Vliesstoff, kann die Oberfläche in der Lage sein, mehr Druck aufzunehmen, ohne dass an der Oberfläche Druckstellen entstehen, die nicht nur ein unschönes Erscheinungsbild darstellen, sondern auch bereits eine Mikroablösung der Laminatschicht von dem Körper darstellen können. Dies kann sich dadurch erklären lassen, dass die Laminatschicht an sich nicht die Form einer Platte aufweist, wie dies bei Surfbrettern nach dem Stand der Technk der Fall ist, sondern die sich entlang der rillenförmigen Vertiefungen erstreckende Anteil der Laminatschicht als Verstärkungsrippen wirken. Entsprechend kann ein im Wesentlichen senkrecht auf die Laminatschicht wirkender Druck durch die Verstärkungsrippen aufgenommen werden. Entsprechend wird nur ein geringer Teil des auf die Laminatschicht wirkenden Drucks, an den Körper weitergeleitet. Der Vliesstoff kann zusätzlich bewirken, dass der auf die Laminatschicht wirkende Druck bereits innerhalb der Laminatschicht flächig verteilt wird, bevor er in die Verstärkungsrippen eingeleitet wird. Hierdurch kann eine höhere Betriebslebensdauer erreicht werden. Auch können durch die vorgeschlagene Vorrichtung die Biegeeigenschaften über einen langen Zeitraum gleich bleibend erhalten werden. Zusätzlich kann unterhalb der ersten Laminatschicht, insbesondere in Verbindung mit einem Surfbrett, in einer an der Oberfläche angeordneten linienförmigen rillenförmigen Vertiefung, die sich im Wesentlichen geradlinig entlang einer sich in Richtung der Längsausdehnung erstreckenden Mittellinie erstrecken kann, eine zusätzliche Verstärkung beispielsweise aus einem mit einer Matrix getränkten Karbonstreifen eingelegt sein. In einer derartigen Konstellation wird dann als erste Laminatschicht die Laminatschicht bezeichnet, die sich als erste Lage zumindest teilweise entlang der umlaufenden rillenförmigen Vertiefung erstreckt. Zur weiteren Erhöhung der Biegesteifigkeit können zusätzliche Laminatschichten auf die erste Laminatschicht aufgebracht werden. Diese zusätzlichen Laminatschichten können sich entweder entlang einer Oberfläche der untersten Laminatschicht erstrecken, also an ihren jeweiligen Oberseiten die Teilflächen und die Vertiefungen abbilden, oder die zusätzlichen Laminatschichten können an ihren Oberseiten plan sein, sich also nur entlang den Teilflächen erstrecken und die umlaufenden rillenförmigen Vertiefungen einebnen. Eine Einebnung kann beispielsweise durch Auffüllen mit der Matrix, ggf. unter Zugabe von Füllstoffen, erfolgen. Es versteht sich, dass die umlaufenden rillenförmigen Vertiefungen bei brettartig geformten Vorrichtungen an deren Oberseiten, Unterseiten und/oder Schmalseiten ausgebildet sein können. Auch können die umlaufenden rillenförmigen Vertiefungen mit nicht umlaufenden rillenförmigen Vertiefungen kombiniert werden. Beispielsweise kann sich bei einer Vorrichtung in Form eines Surfbretts im Wesentlichen von Bug bis Heck eine im Wesentlichen geradlinige Vertiefung erstrecken, die beispielsweise mit einer Kohlenstofffasern beinhaltenden Laminatschicht gefüllt ist.

Gemäß einem weiteren Ausführungsbeispiel der Erfindung grenzt an die erste Teilfläche mit der ersten umlaufenden rillenförmigen Vertiefung eine zweite Teilfläche mit einer zweiten umlaufenden rillenförmigen Vertiefung an.

Durch eine Erhöhung der Anzahl der durch umlaufende rillenförmige Vertiefungen begrenzten Teilflächen, die in sinnvoller Weise aneinander angrenzen und möglicherweise in ihrem Flächeninhalt voneinander variieren können, kann die Steifigkeit gegen Biegung um die Längsachse, die Querachse und die Hochachse, differenzierter erzeugt werden. Zusätzlich kann durch die zusätzlichen umlaufenden rillenförmigen Vertiefungen die Oberfläche und damit die Auflagefläche der Laminatschicht vergrößert werden. Dies kann zusätzlich zu einer verbesserten Verbindung zwischen dem Körper und der Laminatschicht führen.

Gemäß einem weiteren Ausführungsbeispiel der Erfindung bildet ein vorbestimmtes Teilstück der ersten umlaufenden rillenförmigen Vertiefung der ersten Teilfläche ein vorbestimmtes Teilstück der zweiten umlaufenden rillenförmigen Vertiefung der an die erste Teilfläche angrenzenden zweiten Teilfläche.

Somit teilen sich aneinander angrenzende Teilflächen sich ansonsten nebeneinander erstreckende Teilstücke der Vertiefungen. Dies kann den Bedarf an Matrix und Fasermatte gegenüber einer Vorrichtung reduzieren, bei der die rillenförmigen Vertiefungen jeder Teilfläche einzeln umlaufend ausgebildet sind, ohne Teilstücke der rillenförmigen Vertiefungen der benachbarten Teilfläche zu nutzen. Dies kann zu einer Gewichtsersparnis und Materialersparnis führen, ohne dass hierbei nennenswert die Steifigkeit gegen Biegung um die Längsachse, die Querachse und die Hochachse reduziert ist

Gemäß einem weiteren Ausführungsbeispiel der Erfindung weist der Teilbereich der Oberfläche des Körpers eine Vielzahl von durch umlaufende rillenförmige Vertiefungen begrenzte Teilflächen auf, die aneinander angrenzen, und bei denen jeweils vorbestimmte Teilstücke der umlaufenden rillenförmigen Vertiefung einer Teilfläche durch vorbestimmte Teilstücke der umlaufenden rillenförmigen Vertiefung einer benachbarten Teilfläche gebildet sind.

Somit kann durch eine vorbestimmte Anordnung der rillenförmigen Vertiefungen in dem Teilbereich der Oberfläche ein Netz von aneinander angrenzenden Teilflächen erzeugt werden, ohne dass sich rillenförmige Vertiefungen sich gegenseitig berührend nebeneinander erstrecken.

Gemäß einem weiteren Ausführungsbeispiel der Erfindung ist die umlaufende rillenförmige Vertiefung durch eine Aneinanderreihung von Streckenabschnitten oder Kurvenabschnitten oder einer Mischung aus Streckenabschnitten und Kurvenabschnitten gebildet.

Aus einer Aneinanderreihung von Streckenabschnitten und Kurvenabschnitten lässt sich in Aufsicht auf die Oberfläche des Körpers jede beliebige zweidimensionale geometrische Figur erzeugen, die durch die umlaufende rillenförmige Vertiefung in dem Körper ausgebildet werden kann.

Gemäß einem weiteren Ausführungsbeispiel der Erfindung weist die umlaufende rillenförmige Vertiefung eine Kontur eines Sechsecks auf, das mindestens vier jeweils paarweise einander gegenüberliegende im Wesentlichen gleich lange erste Seiten und zwei einander gegenüberliegende im Wesentlichen gleich lange zweite Seiten aufweist.

Hierbei können die zwei einander gegenüberliegende zweite Seiten, die im Wesentlichen gleich lang sind, länger oder kürzer als die verbleibenden vier erste Seiten sein. Der zwischen je zwei aneinander angrenzenden Seiten eingeschlossene Winkel kann im Wesentlichen 60° betragen. Diese spezielle hexagonale Form kann eine nahezu perfekte Raumausnutzung bereitstellen, da Zwischenräume zwischen den einzelnen Sechsecken nicht vorhanden sind. Von allen lückenlos aneinander anreihbaren Formen können Sechsecke das beste Verhältnis von Versteifung, respektive Vertiefung, zu Häufigkeit in Bezug auf die geforderte Steifigkeit besitzen. Damit können aneinander gereihte Sechsecke zur Erreichung einer vorgegebenen Steifigkeit am wenigsten Laminatschicht gegenüber allen anderen geometrischen Formen benötigen. Auch können die Sechsecke derart ausgerichtet sein, dass sich das variable Seitenpaar in Richtung der Längsachse erstreckt. Auch kann sich die Länge dieses Seitenpaares gegenüber den anderen zwei Seitenpaaren in Richtung des Bugs oder Hecks vergrößern, um bei konstanter Krafteinwirkung und im Wesentlichen konstanter Tiefe der umlaufenden rillenförmigen Vertiefungen eine größere Auslenkung der Biegelinie zuzulassen. Natürlich kann sich das variable Seitenpaar quer zu der Längsachse oder sich in jedem beliebigen Winkel hierzu erstrecken. Auch kann für Strukturbauteile der umgekehrte Weg beschritten werden und die zwei Seitenpaare an den Enden die geringste Länge aufweisen, um sich in Richtung Mitte des Strukturbauteils sukzessive zu vergrößern. Gemäß einem weiteren Ausführungsbeispiel der Erfindung ist die umlaufende rillenförmige Vertiefung als ein regelmäßiges Sechseck ausgebildet.

Diese Ausführungsform, bei der alle Seiten im Wesentlichen gleich lang sind, wird auch als Wabe bezeichnet. Die umlaufenden rillenförmigen Vertiefungen erstrecken sich im Wesentlichen in Richtung der Hochachse in den Körper. Obzwar die regelmäßige Sechseckform nicht drehsymmetrisch ist, wird dennoch in der Praxis gerechnet, als ob die die Festigkeit in allen Richtungen gleich ist. Ein wabenförmiger Aufbau durch die in dem Körper umlaufenden rillenförmigen Vertiefungen kann bei geringem Gewicht zu einer hohen mechanischen Steifigkeit führen. Um die Biegelinie um eine Achse oder alle drei Achsen zu beeinflussen, kann beispielsweise bei gleichem Flächeninhalt aller Teilflächen die Tiefe der umlaufenden rillenförmigen Vertiefungen variiert werden.

Gemäß einem weiteren Ausführungsbeispiel der Erfindung weist jede Teilfläche einen Flächeninhalt auf, wobei die Flächeninhalte zumindest teilweise unterschiedlich groß sind.

In der Regel wird sich der Flächeninhalt kontinuierlich in Richtung der Enden entlang der Längsachse vergrößern, um eine definierte Durchbiegung bei einer vorbestimmten Kraft zuzulassen. In Richtung der Querachse können die Flächeninhalte gleich groß sein oder sich ebenfalls verändern, um auch hier eine definierte Biegelinie unter einer vorbestimmten Krafteinwirkung zu erzeugen.

Gemäß einem weiteren Ausführungsbeispiel der Erfindung, ist eine Tiefe, die die umlaufende rillenförmige Vertiefung in den Körper gemessen ab der Oberfläche der angrenzenden Teilfläche eindringt, etwa 0,5 mm bis etwa 15 mm, bevorzugt etwa 2 mm bis etwa 10 mm und besonders bevorzugt etwa 3 mm bis etwa 5 mm.

Je geringer die Tiefe der umlaufenden rillenförmigen Vertiefung ist, desto geringer kann die Steifigkeit gegen Biegung sein.

Gemäß einem weiteren Ausführungsbeispiel der Erfindung ist die Tiefe einer rillenförmigen Vertiefung konstant.

In Verbindung mit konstant tiefen rillenförmigen Vertiefungen können die Flächeninhalte der Teilflächen konstant oder variabel sein. Eine besonders einfache Berechnung der Steifigkeit ergibt sich für lückenlos aneinander gereihte regelmäßige Sechsecke mit rillenförmigen Vertiefungen, die alle gleich tief sind.

Gemäß einem weiteren Ausführungsbeispiel der Erfindung verändert sich die Tiefe einer umlaufenden rillenförmigen Vertiefung.

Wenn sich in der Teilfläche der Oberfläche lediglich eine umlaufende rillenförmige Vertiefung befindet, kann über eine Variation der Tiefe der umlaufenden rillenförmigen Vertiefung bei gleich bleibendem Flächeninhalt der Teilfläche die Steifigkeit gegen Biegung verändert werden.

Gemäß einem weiteren Ausführungsbeispiel der Erfindung ist die Tiefe der umlaufenden rillenförmigen Vertiefungen zweier benachbarter Teilflächen unterschiedlich.

Hierbei kann sich die Tiefe innerhalb der einen umlaufenden rillenförmigen Vertiefung derart verändern, dass in Verbindung mit benachbarten umlaufenden rillenförmigen Vertiefungen ein kontinuierliches Abnehmen oder Zunehmen der Tiefe der einzelnen umlaufenden rillenförmigen Vertiefungen, beispielsweise in Richtung der Enden eines Surfbretts, ausgebildet werden kann. Hierdurch kann die Steifigkeit gegen Biegung, auch Flex genannt, vorbestimmt beeinflusst werden. Auch kann die Änderung der Tiefe stufenförmig erfolgen. Es versteht sich, dass durch Verändern des Flächeninhalts der Teilflächen und/oder Verändern der Tiefe der umlaufenden rillenförmigen Vertiefungen die Steifigkeit gegenüber Biegung um die Längsachse, die Querachse und/oder die Hochachse beinflussbar ist.

Erfindungsgemäß liegt die Fasermatte vollflächig an der umlaufenden rillenförmigen Vertiefung an und es ist zumindest teilweise durch die Fasermatte hindurch geschäumter Kunststoff getreten.

Durch das Hindurchtreten des Kunststoffs, aus dem der Körper gefertigt ist, durch die Fasermatte kommt es zu einer festen Verbindung der Fasermatte an die Vertiefung, respektive an die die umlaufende rillenförmige Vertiefung begrenzende Wandung. Dies kann beispielsweise dadurch erzeugt werden, dass ein Stempel oder eine Matrize, die eine mit der umlaufenden rillenförmigen Vertiefung korrespondierende Erhöhung aufweisen, erhitzt wird und auf den mit der Fasermatte überzogenen Körper, der keine umlaufende rillenförmige Vertiefung aufweist, mit einer vorbestimmten Kraft aufgedrückt wird. Die Temperatur ist hierbei so eingestellt, dass der Kunststoff des Körpers unter der Matrize schmilzt, durch die Fasermatte hindurchtritt und nach Entnahme des Stempels oder der Matrize erkaltet. Hierbei erstarrt der durch die Fasermatte hindurchgetretene Kunststoff. Durch diese Vorgehensweise kann nicht nur Vliesstoff, welcher in allen Richtungen sehr flexibel ist, sondern auch Gewebe oder Gelege, die gegenüber Vliesstoff relativ starr sind, verarbeitet werden. Es versteht sich, dass zum Erreichen einer vorbestimmten Temperatur an der Oberfläche des Körpers der Stempel in Abhängigkeit der Wärmeleitfähigkeit des Fasermaterials und dessen Dicke einen vorbestimmten Zeitraum an das Fasermaterial und damit an die Oberfläche des Körpers mit einem vorbestimmten Druck angepresst werden kann.

Gemäß einem weiteren Ausführungsbeispiel der Erfindung weist der Körper einen Kern und eine sich zwischen dem Kern und der Oberfläche ersteckende Zwischenschicht mit einer vorbestimmbaren Dicke auf, wobei die Zwischenschicht mit der Matrix gefüllt ist.

Gerade durch diese Zwischenschicht mit der Matrix tritt eine Grenzschichtspannung, die bei Belastung an gemäß dem Stand der Technik gefertigten Vorrichtungen zwischen Laminatschicht und Oberfläche auftritt, nicht mehr auf. Vielmehr wird durch diese Zwischenschicht eine durch Krafteinwirkung erzeugte Spannung sukzessive abgebaut. Somit können bei vorgegebener Krafteinwirkung durch entsprechende Dicke der Zwischenschicht sowie deren Elastizität die auftretenden Spannungen soweit abgebaut sein, dass diese den Kern nicht schädigen können. Diese Ausgestaltung verhindert zusätzlich wirkungsvoll ein Ablösen der Laminatschicht von dem Körper. Die Zwischenschicht ist im Wesentlichen durch die Eindringtiefe der Matrix sowie deren Elastizität im ausgehärteten Zustand bestimmt. Um die Eindringtiefe zu beeinflussen, kann die Konsistenz der flüssigen Matrix beeinflusst werden. Beispielsweise kann eine besonders dünnflüssige Matrix verwendet werden oder die Konsistenz der flüssigen Matrix kann durch Erwärmen reduziert werden. Bei Verwendung von beispielsweise Epoxidharz als Matrix kann durch eine reduzierte Zugabe von Härter die Elastizität der ausgehärteten Matrix zusätzlich vergrößert werden. In der Regel verringert sich die Konzentration der Matrix in der Zwischenschicht auf ein gewisses Maß. Die Dicke der Zwischenschicht kann durch die Wahl eines offenporigen Schaums gegenüber einem geschlossenporigen Schaum vergrößert sein.

Gemäß einem weiteren Ausführungsbeispiel der Erfindung ist auf eine Oberseite der sich an der Oberfläche des Körpers erstreckenden Laminatschicht eine zweite Laminatschicht aus einer Fasermatte und einer Matrix laminiert, wobei eine Unterseite der zweiten Laminatschicht sich entlang der Oberseite der Laminatschicht erstreckt.

Durch das Erstrecken der Unterseite der zweiten Laminatschicht entlang der Oberseite der ersten Laminatschicht, die an die Oberfläche des Körpers fest verbunden ist, wird die Kontur der Vertiefungen an einer der Oberseite der ersten Laminatschicht gegenüberliegenden Oberseite der zweiten Laminatschicht im Wesentlichen abgebildet. Somit weist die Oberseite der zweiten Laminatschicht umlaufende rillenförmige Vertiefungen auf. Die zweite Laminatschicht kann sich bezüglich der Fasermatte und/oder der Matrix von der ersten Laminatschicht unterscheiden. Beispielsweise kann die Fasermatte der ersten Laminatschicht Vliesstoff sein und die Fasermatte der zweiten Laminatschicht Glasfasergewebe sein. Die zweite Laminatschicht kann das Konstrukt aus Körper und erster Laminatschicht in allen drei Achsen verstärken. Es ist nicht notwendig, dass die erste und die zweite Laminatschicht die Oberfläche des Körpers vollständig umhüllen. Es kann möglich sein, dass die Oberfläche des Körpers durch die erste Laminatschicht nur in einen oder mehreren Teilbereichen bedeckt ist und die zweite Laminatschicht nur die verbliebenen Teilbereiche der Oberfläche verdeckt. Die zweite Laminatschicht kann auch den gesamten Körper umhüllen und damit auch den Teilbereich, der durch die erste Laminatschicht bedeckt ist. Es versteht sich, dass die zweite Laminatschicht im sogenannten Nass-in-Nass Verfahren auf die erste Laminatschicht aufgebracht werden kann. Bei diesem Verfahren ist die Matrix der ersten Laminatschicht noch nicht ausgehärtet, bevor die Matrix der zweiten Laminatschicht aufgebracht wird. Alternativ kann die zweite Laminatschicht auf die erste Laminatschicht aufgebracht werden, nachdem von der ersten Laminatschicht ein Abreißgewebe entfernt wurde, unter dem die Matrix der ersten Laminatschicht ausgehärtet ist.

Gemäß einem weiteren Ausführungsbeispiel der Erfindung ist auf eine Oberseite der sich an der Oberfläche des Körpers erstreckenden Laminatschicht eine zweite Laminatschicht aus einer Fasermatte und einer Matrix laminiert, wobei eine Unterseite der zweiten Laminatschicht sich ausschließlich entlang der Oberseite der Laminatschicht der Teilflächen erstreckt, so dass der Oberseite der zweiten Laminatschicht eben ist.

Die Unterseite der zweiten Laminatschicht erstreckt sich lediglich entlang eines Teilstücks der Oberseite der ersten Laminatschicht, die mit der Teilfläche der Oberfläche fest verbunden ist. Die zweite Laminatschicht kann die umlaufende rillenförmige Vertiefung, die sich an der Oberseite der ersten Laminatschicht ausgebildet hat, dadurch überbrücken, dass die sich an der Oberseite der ersten Laminatschicht abgebildete umlaufende rillenförmige Vertiefung mittels einer Matrix, der möglicherweise ein Füllstoff beigemischt wurde, bündig mit der Teilfläche aufgefüllt ist. Somit kann die Oberseite der zweiten Laminatschicht im Wesentlichen eben sein. In der Regel befinden sich keine Luftblasen in der ersten Laminatschicht, der zweiten Laminatschicht und in der die umlaufende rillenförmige Vertiefung einebnenden Matrix. Es versteht sich, dass auf die zweite Laminatschicht auch weitere Laminatschichten aufgebracht sein können. Auch können zwischen den Laminatschichten an vorbestimmten Teilbereichen je nach gewünschter Größe und Form Fasermatten wie beispielsweise aus Kohlenstoff-Basalt oder Dyneema als Verstärkungen eingebracht sein.

Weiter erfindunsgemäß ist ein Verfahren zur Herstellung eines Strukturbauteils mit einer Verstärkung aus einem Faser-Kunststoff-Verbund, insbesondere Surfbrett zum Stand-up paddeling, Wellenreiten, Windsurfen und dergleichen, mit einem Körper aus Kunststoff vorgeschlagen, wobei der Körper von einer Oberfläche begrenzt ist, an der eine Fasermatte unlösbar verbunden ist. Das Verfahren weist folgende Verfahrensschritte auf:
Aufbringen der Fasermatte auf den durch die Oberfläche begrenzten Körper und anschließend Ausbilden mindestens einer umlaufenden rillenförmigen Vertiefung mindestens in einem Teilbereich der Oberfläche durch Erwärmen der Oberfläche und Anpressen einer Matrize an den Faser-Kunststoff-Verbund, wobei durch die umlaufende rillenförmige Vertiefung eine vorbestimmte Teilfläche der Oberfläche begrenzt wird.

Somit kann das Fertigen der wenigstens einen Vertiefung durch die Fasermatte hindurch erfolgen. In der Regel wird durch einen Stempel, der eine mit der wenigstens einen Vertiefung korrespondierende Erhöhung aufweist, unter Aufbringen einer vorbestimmten Kraft, die Vertiefung an der Oberfläche erzeugt.

Gemäß einem weiteren Ausführungsbeispiel der Erfindung wird ein Stempel auf eine vorbestimmte Temperatur erhitzt, wobei der Stempel mindestens eine mit der umlaufenden rillenförmigen Vertiefung korrespondierende Erhöhung aufweist.

Durch die Erwärmung des Stempels wird der Kraftaufwand zur Erzeugung der Vertiefung reduziert. Die Erwärmung des Stempels kann auf eine Temperatur erfolgen, die zum Schmelzen des geschäumten Kunststoffs führen kann. Daher kann die Temperatur abhängig vom gewählten Kunststoff sein. Auch kann über die Höhe der Temperatur die Eindringtiefe des Stempels in den Körper bei Aufbringen einer vorbestimmten Kraft auf den Stempel regulierbar sein. Somit kann unter konstanter Kraft der Stempel bei höherer Temperatur tiefer eindringen als bei niedrigerer Temperatur. Der geschmolzene Kunststoff kann durch die Fasermatte hindurchdringen und somit ein Anhaften der Fasermatte an der Vertiefung, respektive an der Wandung der Vertiefung, bewirken. Hierdurch kann nach Tränken der Fasermatte mit der Matrix ein besonders enger Verbund zwischen Körper und erster Laminatschicht erzeugt werden. Eine Erwärmung' des Stempels kann beispielsweise mittels Induktion oder durch eine externe Wärmequelle erfolgen. Induktion kann sich anbieten, wenn der Stempel aus einem ferromagnetischen Werkstoff gefertigt ist. Es können zum Erwärmen des Stempels auch elektrische Heizpatronen verwendet werden, wie diese in der Spritzgießtechnik zum Erwärmen von Spritzgießformen für die Kunststoffverarbeitung verwendet werden. Der Stempel kann zusätzlich einen Temperatursensor aufweisen, mittels dem die Temperatur des Stempels überwacht werden kann. Dieser Temperatursensor kann mit einem Temperaturregelgerät gekoppelt sein, mittels dem die Temperatur so geregelt wird, dass der Stempel eine vorbestimmte Temperatur erreicht.

Gemäß einem weiteren Ausführungsbeispiel der Erfindung wird die Oberfläche des Körpers über den Schmelzpunkt des Kunststoffs erwärmt und anschließend der Stempel in den mit der Fasermatte überzogenen Teilbereich des Körpers gedrückt. Die Oberfläche des Körpers kann durch die Fasermatte hindurch erwärmt werden. Dies kann beispielsweise durch Anregen der Dipole einiger Kunststofftypen (polare Kunststoffe) mittels Hochfrequenz erfolgen. Auch können durch Ultraschallwellen eine innere Reibung in den Kunststoffen erzeugt werden, die zu einem Aufschmelzen der Oberfläche des Körpers führen kann. Auch kann gezielt heißes Gas, insbesondere heiße Luft zur Erwärmung der Oberfläche des Körpers genutzt werden, die über die Fasermatte geleitet wird. Dies kann Vorteil in der Zykluszeit der Fertigung bewirken, da hierdurch das Formen der rillenförmigen Vertiefungen vom Aufschmelzen der Oberfläche des Körpers entkoppelt sein kann. Auch kann hierdurch eine kontinuierliche Fertigung ermöglicht sein.

Gemäß einem weiteren Ausführungsbeispiel der Erfindung weist der Stempel alle mit den umlaufenden rillenförmigen Vertiefungen korrespondierenden Erhöhungen auf.

Somit können alle Teilflächen in einem Arbeitsgang erzeugt werden. Hierbei kann der Stempel, auch Matrize genannt, die Größe des Teilbereichs der Oberfläche besitzen, die die umlaufenden rillenförmigen Vertiefungen aufweisen. Wenn sich die rillenförmigen Vertiefungen netzartig über die gesamte Oberfläche der Vorrichtung erstrecken, kann die Matrize die Größe und Form der gesamten Oberfläche aufweisen oder zur Bedeckung der gesamten Oberfläche mehr als eine Matrize eingesetzt werden.

Gemäß einem weiteren Ausführungsbeispiel der Erfindung ist die vorbestimmte Temperatur des Stempels zwischen etwa 90°C und etwa 220°C, bevorzugt zwischen etwa 120°C und etwa 180°C und besonders bevorzugt zwischen etwa 140°C und etwa 160°C.

Die Temperatur kann in Abgängigkeit des Schmelzpunkts des geschäumten Kunststoffs gewählt werden, aus der der Körper gefertigt ist. Auch kann die Temperatur entlang der Matrize ein Temperaturprofil aufweisen, um bei gleich bleibender Krafteinwirkung unterschiedliche Eindringtiefen der Matrize in den Körper zu erzeugen. In zweckmäßiger Weise kann ein Temperaturprofil innerhalb der Matrize durch die Verwendung mehrerer Heizpatronen erzeugt werden. Die Matrize kann beispielsweise in Urformtechnik erzeugt werden, also durch Auftragen und miteinander Verschmelzen von einzelnen Schichten durch Einsatz von Laser, oder auch durch spanende Bearbeitung, vorzugsweise durch Fräsen. Auch lassen sich durch Einsatz von CNC-Technik Matrizen erzeugen, die ein- oder zweidimensional gekrümmt sein können. In der Regel wird die Größe und die Form der Matrize so gewählt sein, dass in einem Arbeitsgang an einer Fläche des Strukturbauteils, also vordere Fläche, seitliche Fläche oder hintere Fläche, alle gewünschten umlaufenden rillenförmigen Vertiefungen erzeugbar sind. Eine typische Herstellweise zur Erzeugung des Strukturbauteils kann sein, den Körper, der aus expandiertem Polystyrol gefertigt sein kann, beispielsweise mit einer Fasermatte, die beispielsweise ein Gewebe aus Glasfasern sein kann, zu umhüllen und in dem Teilbereich, in dem die umlaufenden rillenförmigen Vertiefungen gebildet werden sollen, die Matrize aufzubringen, deren Erhöhungen eine Wabenform bilden. Wenn die Matrize bereits auf die vorbestimmte Temperatur durch eine externe Wärmequelle erwärmt wurde, kann die erwärmte Matrize an die an der Oberfläche des Körpers zumindest im Wesentlichen anliegenden Fasermatte mit einer vorbestimmten Kraft angedrückt werden. Wenn die Matrize beim Anpressen an die Fasermatte eine geringere Temperatur als die vorbestimmte Temperatur aufweist, kann die Matrize nun auf die vorbestimmte Temperatur beispielsweise durch die Heizpatronen erwärmt werden. Das Anpressen der Matrize an die Fasermatte kann beispielsweise in einer hydraulisch oder pneumatisch betriebenen Presse erfolgen. Auch können direkt auf die Matrize Pneumatik- oder Hydraulikzylinder wirken. Bei einem Betrieb mit mehreren über die Längserstreckungsrichtung des Strukturbauteils verteilten Zylindern kann der Anpressdruck auf die einzelnen Andruckpunkte an der Matrize unterschiedlich sein. Auch kann die auf die Matrize wirkende Kraft mechanisch, bspw. durch Gewinde- oder Kniehebelkonstruktionen, aufgebracht werden. Die Matrize kann in Abhängigkeit des verwendeten Kunststoffs auf etwa 150°C erwärmt werden. Bei dieser Temperatur kann der geschäumte Kunststoff schmelzen. Der geschmolzene Kunststoff kann durch die Fasermatte hindurchtreten und nach Abkühlung erhärten. Hierbei kann die Fasermatte im Wesentlichen vollflächig an der Vertiefung, respektive an der Wandung der Vertiefung, anliegen. Nach Trennung des Fasermatte-Körper-Verbunds von der Matrize kann die Fasermatte mit einer Matrix getränkt werden. Dies kann durch Tränken der Fasermatte mit einer Matrix erfolgen. Auch kann die Matrix nach dem Stand der Technik mit einem Abreißgewebe bedeckt werden, der mit der Matrix getränkte Fasermatte-Körper-Verbunds in einen Vakuumsack eingebracht und unter Unterdruck aushärten. Hierdurch kann die Matrix in die Fasermatte hineingedrückt werden. Zusätzlich kann auch Matrix in den Körper eindringen. Ferner kann ein Sauggewebe auf dem Abreißgewebe aufgelegt sein, welches überschüssiges Harz aufnehmen kann, das von dem Körper und/oder der Fasermatte nicht aufgenommen wird. Nach Entfernen des Abreißgewebes kann auf die Laminatschicht aus Fasermatte und Matrix eine zweite Laminatschicht aus beispielsweise Glasfasergewebe und der gleichen Matrix aufgebracht werden, die ebenfalls in dem Vakuumsack durch Unterdruck an die erste Laminatschicht angepresst wird.

Gemäß einem weiteren Ausführungsbeispiel der Erfindung wird der Stempel mit einem vorbestimmten Druck während eines vorbestimmten Zeitraums über die Fasermatte an die Oberfläche des Körpers angepresst. Hierbei kann der Stempel mit einer vorbestimmten Temperatur auf einen ersten Teilbereich mit einem ersten Druck auf die erwärmte Oberfläche der Fasermatte, die auf der Oberfläche des Körpers zumindest in einem Teilbereich aufliegt, einen ersten vorbestimmten Zeitraum angepresst werden. Anschließend kann der Stempel mit der gleichen vorbestimmten Temperatur auf einen zweiten Teilbereich mit einem zweiten Druck auf die erwärmte Oberfläche der Fasermatte, die auf der Oberfläche des Körpers zumindest in einem Teilbereich aufliegt, gegebenenfalls einen zweiten vorbestimmten Zeitraum angepresst werden, wobei der erste Druck von dem zweiten Druck verschieden ist. Hierdurch kann die Eindringtiefe des Stempels in den Körper an dem ersten Teilbereich unterschiedlich zu der Eindringtiefe an dem zweiten Teilbereich sein. In Abhängigkeit der verwendeten Kunststoffe kann eine Anpassung der Verweilzeit des Stempels in den Körper eingefahrenem Zustand notwendig sein, damit der geschmolzene Kunststoff die Fasermatte ausreichend durchdringen kann.

Gemäß einem weiteren Ausführungsbeispiel der Erfindung wird die Vorrichtung als Surfbrett zum Stand-up paddeling, Wellenreiten, Windsurfen und dergleichen, verwendet. Während des Betriebs schwimmt eine Unterseite auf dem Wasser und die der Unterseite gegenüberliegende Oberseite weist eine Oberfläche auf, die mindestens in einem Teilbereich mindestens eine umlaufende rillenförmige Vertiefung aufweist, durch die eine vorbestimmte Teilfläche der Oberfläche begrenzt ist.

Es kann nur die Oberseite der Vorrichtung oder nur die Unterseite der Vorrichtung mindestens eine umlaufende rillenförmige Vertiefung aufweisen oder auch die Unterseite und die Oberseite des Körpers je mindestens eine umlaufende rillenförmige Vertiefung aufweisen.

Es sei darauf hingewiesen, dass Merkmale der Vorrichtung, wo sinnvoll, auch als Merkmale des Verfahrens dienen können, und umgekehrt.

Ausführungsformen der Erfindung werden nachfolgend mit Bezug auf die beigefügten Figuren beschrieben. Die Figuren sind lediglich schematisch und nicht maßstabsgetreu.

### Kurze Beschreibung der Figuren

- Fig. 1: zeigt eine Aufsicht auf einen Ausschnitt einer Vorrichtung mit sechseckigen umlaufenden rillenförmigen Vertiefungen in einem Teilbereich mit einer Laminatschicht;
- Fig. 2: zeigt einen vergrößerten Ausschnitt aus dem in Fig. 1 dargestellten Teilbereich der Vorrichtung in Aufsicht;
- Fig. 3: zeigt eine erste alternative Ausführung der umlaufenden rillenförmigen Vertiefungen in Aufsicht;
- Fig. 4: zeigt eine zweite alternative Ausführung der umlaufenden rillenförmigen Vertiefungen in Aufsicht;
- Fig. 5: zeigt ein Surfbrett mit wabenförmig angeordneten umlaufenden rillenförmigen Vertiefungen in Aufsicht;
- Fig. 6: zeigt einen Querschnitt durch einen Ausschnitt der aus Figur 1 bekannten Vorrichtung;
- Fig. 7: zeigt einen Querschnitt durch einen Ausschnitt der aus Figur 1 bekannten Vorrichtung mit einer zweiten Laminatschicht in einer ersten Ausführung;
- Fig. 8: zeigt einen Querschnitt durch einen Ausschnitt der aus Figur 1 bekannten Vorrichtung mit einer zweiten Laminatschicht in einer zweiten Ausführung; und
- Fig. 9: zeigt ein Verfahrensablauf zur Herstellung der Vorrichtung.

### Detaillierte Beschreibung beispielhafter Ausführungsformen

An dieser Stelle soll vorausgeschickt werden, dass gleiche Teile in den einzelnen Figuren gleiche Bezugszeichen aufweisen.

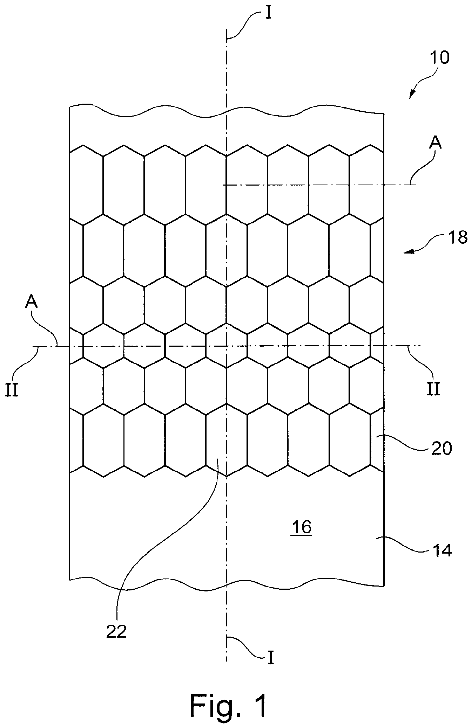

Figur 1 zeigt eine Aufsicht auf einen Ausschnitt einer vorgeschlagenen Vorrichtung 10. Die Vorrichtung 10 besteht aus einem brettartigen Körper 12, der aus expandiertem Polystyrol hergestellt ist. Der Körper 10 kann jedoch auch jede andere 3-dimensionale geometrische Form besitzen. Auch kann der Körper 10 selbst in Sandwich-Bauweise aus mehreren Lagen Kunststoffe erzeugt sein. Hierbei können die Kunststoffe homogen inhomogen und/oder heterogen sein. Auch können in dem Körper Kammern vorgesehen sein, die mit Gas, vorzugsweise Luft, gefüllt sind. Der Körper 10 ist durch eine Oberfläche 14 begrenzt, an der eine erste Laminatschicht 16 aus einer Fasermatte, nämlich aus Glasfasern bestehender Vliesstoff, und einer Matrix, nämlich Epoxidharz, unlösbar verbunden ist. Die Oberfläche 14 besitzt einen Teilbereich 18, in dem eine Vielzahl von umlaufenden rillenförmigen Vertiefungen 20 ausgebildet ist, die den Teilbereich 18 der Oberfläche 14 netzartig überzieht. Die umlaufenden rillenförmigen Vertiefungen 20 begrenzen Teilflächen 22 mit einem vorbestimmten Flächeninhalt.

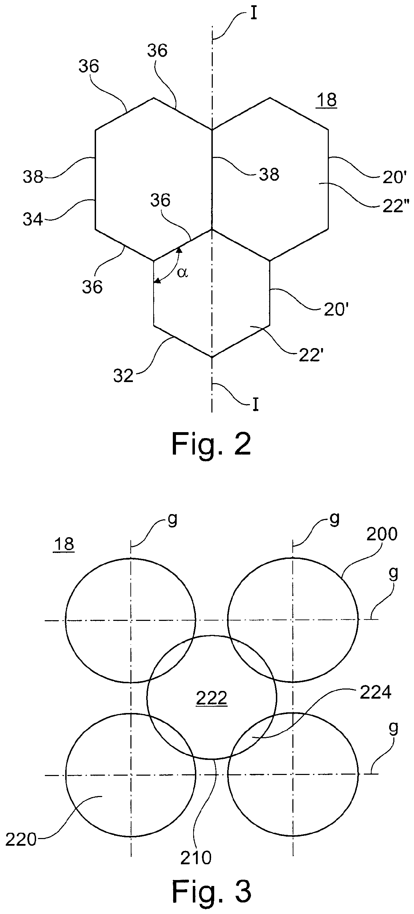

Figur 2 zeigt einen vergrößerten Ausschnitt aus dem mit der Laminatschicht 16 beschichteten Teilbereich 18 der Oberfläche 14 der Vorrichtung 10. Eine erste rillenförmige Vertiefung 20' ist umlaufend ausgebildet und begrenzt eine vorbestimmte erste Teilfläche 22' der Oberfläche 14. Die erste umlaufende rillenförmige Vertiefung 20' bildet ein regelmäßiges Sechseck 30. Hierbei sind alle Strecken 32, aus denen das Sechseck 30 gebildet ist, gleich lang. Entsprechend sind auch zwischen den benachbarten Strecken 32 eingeschlossene Winkel α im Wesentlichen gleich groß, nämlich 60°. An die erste Teilfläche 22' mit der ersten umlaufenden rillenförmigen Vertiefung 20' grenzt eine zweite Teilfläche 22" mit einer zweiten umlaufenden rillenförmigen Vertiefung 20" an. Auch diese zweite umlaufende rillenförmige Vertiefung 20" ist als ein Sechseck 34 ausgebildet. Allerdings unterscheidet sich das Sechseck 34 von dem regelmäßigen Sechseck 30. Das Sechseck 34 besitzt vier jeweils paarweise einander gegenüberliegende Seiten 36, die im Wesentlichen gleich lang sind wie die Seiten des regelmäßigen Sechsecks 30. Zwei sich in Richtung der Längsachse I-I erstreckende und einander gegenüber liegende Seiten 38 der zweiten umlaufenden rillenförmigen Vertiefung 20" sind länger als die übrigen Seiten 36. Entsprechend ist auch die durch die als regelmäßiges Sechseck 30 ausgebildete erste umlaufende rillenförmige Vertiefung 20' begrenzte erste Teilfläche 22' kleiner als die durch das als Sechseck 34 ausgebildete zweite umlaufende rillenförmige Vertiefung 20" begrenzte zweite Teilfläche 22".

Figur 3 zeigt eine erste alternative Ausführung der umlaufenden rillenförmigen Vertiefungen 200, 210, die in Aufsicht eine Kreisform darstellen, wobei jeder Kreis 200, 210 den gleichen Durchmesser besitzt. Dargestellt sind fünf Kreise 200, 210, von denen vier 200 voneinander beabstandet nebeneinander und untereinander angeordnet sind. Verbindungsgeraden g, die die Mittelpunkte der benachbarten Kreise 200 verbinden, sind entweder parallel zueinander oder stehen aufeinander senkrecht. Jeder der vier Kreise 200 ist von dem benachbarten mit gleichem Abstand beabstandet. Der fünfte Kreis 210 ist mittig zwischen den vier Kreise 200 angeordnet und erstreckt sich in jeden der vier Kreise 200 hinein. Durch diese Anordnung ergeben sich neun Teilflächen 220, 222, 224 mit im Wesentlichen drei unterschiedlichen Flächeninhalten. Jeder der vier Kreise 200 beinhaltet eine erste Teilfläche 220. Ferner gibt es vier zweite Teilflächen 224, die durch den fünften Kreis 210 aus einer Gesamtfläche eines jeden der vier Kreise 200 begrenzt sind. Der fünfte Kreis beinhaltet eine dritte Teilfläche 222.

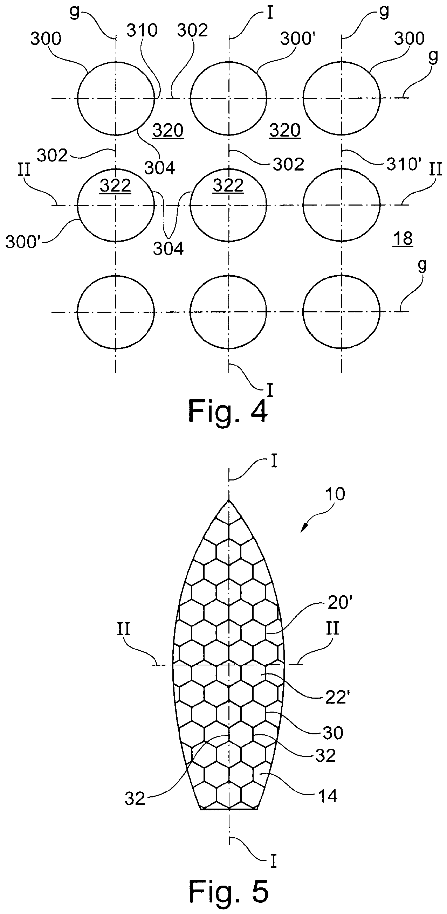

Figur 4 zeigt eine zweite alternative Ausführung der umlaufenden rillenförmigen Vertiefungen 300, 300', 310, 310' in Aufsicht. Neun umlaufende rillenförmige Vertiefungen 300, 300' sind Kreise mit gleichem Durchmesser. Diese Kreise 300, 300' sind in einer 3x3-Anordnung dargestellt, also in dem vorliegenden Ausgestaltungsbeispiel drei untereinander angeordnete Zeilen mit je drei nebeneinander angeordneten Kreisen 300, 300'. Die Mittelpunkte der benachbarten Kreise 300, 300' besitzen voneinander einen Abstand, der größer als der Durchmesser eines Kreises 300, 300' ist. Jede Verbindungsgerade g durch die Mittelpunkte benachbarter Kreise 300. 300' erstreckt sich in dem vorliegenden Ausführungsbeispiel entweder entlang der Längsachse I-I oder rechtwinklig hierzu, also entlang der Querachse II-II. Jede kachelförmige Teilfläche 320, 320' ist begrenzt durch die umlaufende rillenförmige Vertiefung 310, 310', die sich aus einer alternierenden Aneinanderreihung von Streckenabschnitten 302 und Kurvenabschnitten 304 ergibt. Hierbei bilden die geraden Streckenabschnitte 302 der umlaufenden rillenförmigen Vertiefung 310 einer Teilfläche 320 ein Teilstück der umlaufenden rillenförmigen Vertiefung 310' der benachbarten Teilfläche 320'. Auch die Kurvenabschnitte 304, die die kachelförmige Teilfläche 320 begrenzen, bilden jeweils ein Teilstück der kreisförmigen umlaufenden rillenförmigen Vertiefung 300, 300' der an die kachelförmige Teilfläche 320 angrenzenden kreisförmigen Teilflächen 322.

Figur 5 zeigt die Vorrichtung 10 in Form eines Surfbretts, welches sich über die gesamte Oberfläche 14 erstreckende umlaufende rillenförmige Vertiefungen 20' besitzt, von denen jede die Form eines regelmäßigen Sechsecks 30, einer so genannten Wabe, mit im Wesentlichen gleichem Flächeninhalt 22' besitzt. Hierbei erstrecken sich zwei einander gegenüberliegende Streckenabschnitte 32 im Wesentlichen parallel zu einer Längsachse I-I, entlang derer sich das Surfbrett 10 erstreckt. Jeder Streckenabschnitt 32 bildet ein Teilstück der umlaufenden rillenförmigen Vertiefung 20' von aneinander angrenzenden Teilflächen 22'.

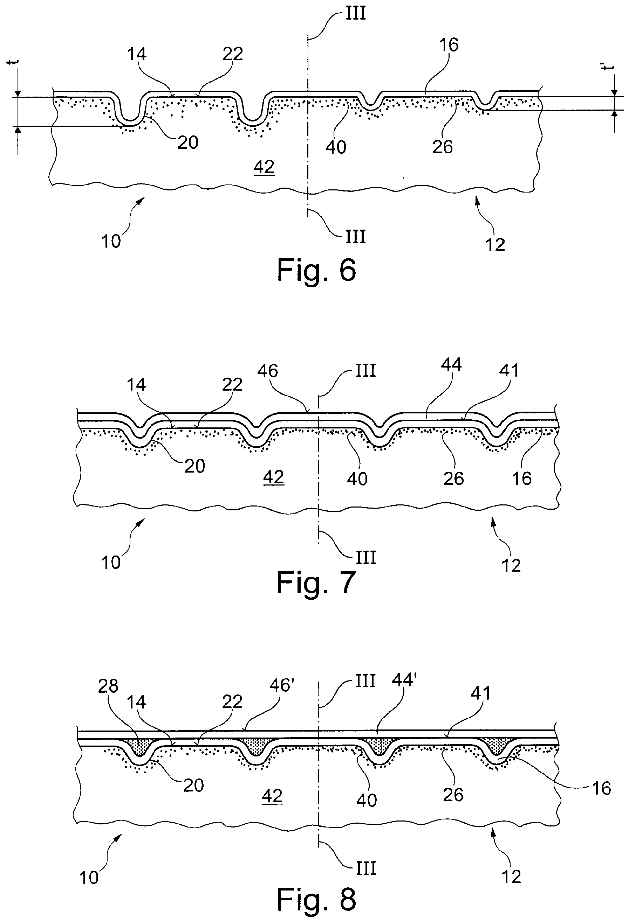

Figur 6 zeigt einen Querschnitt durch einen Ausschnitt der aus Figur 1 bekannten Vorrichtung 10 entlang einer in Figur 1 ersichtlichen Schnittlinie A-A. Der Querschnitt erstreckt sich entlang einer senkrecht auf die Längsachse I-I und die Querachse II-II stehenden Hochachse III-III. Die den Körper 12 begrenzende Oberfläche 14 besitzt Teilflächen 22, die durch umlaufende rillenförmige Vertiefungen 20 begrenzt sind. Entlang der Oberfläche 14 erstreckt sich die Laminatschicht 16, die unlösbar mit der Oberfläche 14 verbunden ist. In dem hier dargestellten Ausführungsbeispiel verändert sich eine Tiefe t, t', die sich von der Teilfläche 22 bis zu einem tiefsten Punkt der umlaufenden rillenförmigen Vertiefung 20 erstreckt. Deutlich sichtbar sind in diesem Ausführungsbeispiel die unterschiedlichen Tiefen t, t'. Die Tiefen können etwa 0,5mm bis etwa 15mm betragen. In dem vorliegenden Ausführungsbeispiel ist die größere Tiefe t 5mm und die kleinere Tiefe t' 3mm. Nicht dargestellt ist in diesem Ausführungsbeispiel ein Durchdringen des geschäumten Polystyrols aus dem der Körper 10 hergestellt ist, durch den Vliesstoff aus Glasfasern hindurch. Aus der Laminatschicht 16 erstreckt sich Matrix 26 in den Körper 12 hinein und bildet eine Zwischenschicht 40 zwischen der Oberfläche 14 und einem Kern 42 des Körpers 12. Durch diese Zwischenschicht 40 ist eine Grenzspannung zwischen der Laminatschicht 16 und der Oberfläche 14 verhindert. Vielmehr wird eine auf die Laminatschicht 16 wirkende Kraft mittels der Zwischenschicht 40, in der ein Anteil der Matrix 26 von der Oberfläche 14 bis zum Kern 42 auf ein vorbestimmtes Maß verringert ist, zumindest teilweise absorbiert und lediglich die verbleibende Kraft in den Kern geleitet,
Figur 7 zeigt einen Querschnitt durch einen Ausschnitt der aus Figur 1 bekannten Vorrichtung 10 entlang der in Figur 1 ersichtlichen Querachse II-II. Auch hier erstreckt sich der Querschnitt entlang der Hochachse III-III. An einer Oberseite 41 der ersten Laminatschicht 16 erstreckt sich eine zweite Laminatschicht 44, die unlösbar mit der ersten Laminatschicht 16 verbunden ist. Somit erstreckt sich die zweite Laminatschicht 44 entlang der umlaufenden rillenförmigen Vertiefungen 20 und bildet an seiner Oberseite 46 die Oberfläche 14 mit den umlaufenden rillenförmigen Vertiefungen 20 ab.

Figur 8 zeigt einen Querschnitt durch einen Ausschnitt der aus Figur 1 bekannten Vorrichtung 10 entlang der in Figur 1 ersichtlichen Querachse II-II. Auch hier erstreckt sich der Querschnitt entlang der Hochachse III-III. Im Gegensatz zu der Ausführungsform der Figur 7 sind die sich an der Oberseite 41 der ersten Laminatschicht 16 abbildenden umlaufenden rillenförmigen Vertiefungen 20 mit einer gefüllten Matrix 28 gefüllt. Eine gefüllte Matrix 28 wird dadurch erreicht, dass, der in dem vorliegenden Ausführungsbeispiel der Matrix Füllstoff in Form von Glasfaserschnipsel beigemischt wurde, Eine gefüllte Matrix 28 kann auch in größeren Schichtstärken spannungsfrei aushärten und aufgrund der Füllstoffe elastisch sein. In die sich an der Oberseite 41 der ersten Laminatschicht 16 abbildenden Vertiefungen 20 ist so viel gefüllte Matrix 28 eingefüllt, dass die Vertiefungen 20 überbrückt sind und eine zweite Laminatschicht 44' im Bereich der Teilflächen 22 mit der ersten Laminatschicht 16 und im Bereich der Vertiefungen 20 mit der gefüllten Matrix 28 unlösbar verbunden ist. Die zweite Laminatschicht 44' bildet eine im Wesentlichen plane Oberseite 46' aus.

Durch die umlaufenden rillenförmigen Vertiefungen kann die Oberfläche vergrößert werden, so dass die Laminatschicht auf einer gegenüber einer Oberfläche ohne Vertiefungen vergrößerten Fläche aufliegen kann. Durch die durch die rillenförmige Vertiefung vergrößerte Oberfläche können mehr Adhäsionskräfte wirken, die somit zu einer verbesserten Verbindung der Laminatschicht an den geschäumten Kunststoff des Körpers führen. Ferner kann die Matrix durch geeignete Maßnahmen derart eingestellt werden, dass sie in den Körper eindringt, dort eine Zwischenschicht bildet, welche die Verbindung der Laminatschicht an den Körper verbessert. Die umlaufenden rillenförmigen Vertiefungen begrenzen Teilflächen der Oberfläche mit einer beliebigen Kontur. Durch die umlaufenden rillenförmigen Vertiefungen kann nicht nur die Oberfläche zur Erhöhung der Verbindungskräfte der Laminatschicht an den Körper erhöht werden, sondern auch die Biegesteifigkeiten um die sich in Längsrichtung der Vorrichtung erstreckenden Längsachse, der Querachse und der Hochachse. Ferner kann durch konstante oder variierte Tiefe der umlaufenden rillenförmigen Vertiefung und durch den durch die umlaufende rillenförmige Vertiefung eingeschriebenen Flächeninhalt der Teilflächen die Biegesteifigkeiten um die Längsachse, die Querachse und/oder die Hochachse gezielt an die tatsächlich auftretenden Belastungen angepasst werden. Zur Erhöhung der Biegesteifigkeit können zusätzliche Laminatschichten auf die erste Laminatschicht aufgebracht werden.

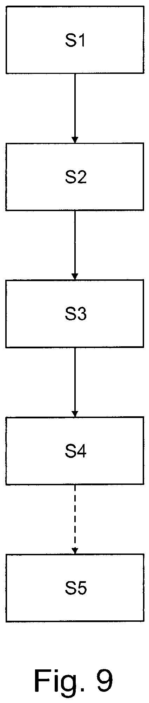

Figur 9 zeigt ein Verfahrensschema für die Herstellung eines Strukturbauteils mit einer Verstärkung aus einem Faser-Kunststoff-Verbund, insbesondere Surfbrett zum Stand-up paddeling, Wellenreiten, Windsurfen und dergleichen. Der Verfahrensschritt S1 umfasst Bereitstellen eines im Wesentlichen brettartigen Körpers aus geschäumten Kunststoff, der von einer Oberfläche begrenzt ist und mit einer Fasermatte, in dem vorliegenden Ausführungsbeispiel von einem Vliesstoff aus Glasfasern vollumfänglich umhüllt ist. In einem folgenden Verfahrensschritt S2 werden die umlaufenden rillenförmigen Vertiefungen in einem Teilbereich der Oberfläche aufgebracht, wobei durch die umlaufende rillenförmige Vertiefungen vorbestimmte Teilfläche der Oberfläche begrenzt werden. Hierzu wird eine Matrize, die in dem vorliegenden Ausführungsbeispiel eine Größe besitzt, um alle umlaufenden rillenförmigen Vertiefungen in einem Verfahrensschritt auszuführen. An der Matrize sind Erhöhungen ausgebildet, die korrespondierend zu den aufzubringenden umlaufenden rillenförmigen Vertiefungen sind. Die Matrize wird auf die Fasermatte an die vorbestimmte Stelle aufgelegt, dass die Erhöhungen zu der Fasermatte weisen. In einem folgenden Verfahrensschritt S3 wird die Matrize mittels Pneumatikzylinder mit einer vorbestimmten Kraft an den Fasermatte-Körper-Verbund gepresst und die Matrize mittels in der Matrize angeordneter Heizpatronen auf etwa 150°C erwärmt. Bei einer geringeren Temperatur der Matrize kann die Eindringtiefe der Matrize in den Körper des Fasermatte-Körper-Verbunds reduziert werden. Durch die Temperatur schmilzt der Kunststoff des Körpers auf und dringt zumindest teilweise durch die Fasermatte hindurch. Nach Aufbringen der Vertiefungen wird die Matrize von dem Fasermatte-Körper-Verbund entfernt. In einem weiteren Verfahrensschritt S4 wird die Fasermatte mit Matrix getränkt, mit einem Abreißgewebe belegt, in einen Vakuumsack gelegt und ein vorbestimmter Unterdruck erzeugt, um die Matrix in die Fasermatte eindringen zu lassen. Hierbei kann die Matrix durch die Fasermatte hindurch auch in den Körper dringen und somit eine an die Oberfläche des Körpers angrenzende Zwischenschicht bilden, in der der Volumenanteil der Matrix mit zunehmender Entfernung von der Oberfläche bis zu einer bestimmten Konzentration abnimmt. Nach Erreichen dieser Konzentration dringt die Matrix in der Regel nicht tiefer in den Körper ein. Nach Entnahme des Strukturbauteils und Entfernen des Abreißgewebes ist dieser Verfahrensschritt beendet. Zur Verstärkung des Strukturbauteils kann in einem weiteren Verfahrensschritt S5 eine oder mehrere Laminatschichten auf die erste Laminatschicht aufgebracht werden. Hierbei können die Vertiefungen in den folgenden Laminatschichten abgebildet werden oder überbrückt werden. Auch kann die wenigstens eine zusätzliche Laminatschicht nur einen Teilbereich auf eine der Laminatschichten aufgebracht sein, um in Teilbereichen beispielsweise die Schlagzähigkeit oder die maximal zulässige Druckbelastung zu erhöhen. Die Optionalität des Verfahrensschritts S5 ist durch einen gestrichelten Pfeil angedeutet.

## Patentansprüche

1. Vorrichtung, insbesondere Surfbrett zum Stand-up paddeling, Wellenreiten, Windsurfen und dergleichen, mit einem Körper aus geschäumtem Kunststoff, wobei der Körper (12) von einer Oberfläche (14) begrenzt ist, an der eine Fasermatte unlösbar verbunden ist, **dadurch gekennzeichnet, dass** die Oberfläche (14) mindestens in einem Teilbereich (18) mindestens eine umlaufende rillenförmige Vertiefung (20, 20', 20", 200, 210, 300, 300', 310, 310") aufweist, durch die eine vorbestimmte Teilfläche (22,22',22",220,222,224, 320, 320") der Oberfläche (14) begrenzt ist, wobei die rillenförmige Vertiefung (20, 20', 20", 200, 210, 300, 300', 310, 310") durch Erwärmen der Oberfläche und Anpressen einer Matrize über die Fasermatte in die erwärmte Oberfläche des Körpers (12) ausgebildet ist, so dass die Fasermatte an der umlaufenden rillenförmigen Vertiefung (20) vollflächig anliegt und dass zumindest teilweise durch die Fasermatte hindurch geschäumter Kunststoff getreten ist.

2. Vorrichtung nach Anspruch 1, **dadurch gekennzeichnet, dass** an die erste Teilfläche (22') mit der ersten umlaufenden rillenförmigen Vertiefung (20') eine zweite Teilfläche (22") mit einer zweiten umlaufenden rillenförmigen Vertiefung (20") angrenzt.

3. Vorrichtung nach Anspruch 2, **dadurch gekennzeichnet, dass** ein vorbestimmtes Teilstück (32, 302, 304) der ersten umlaufenden rillenförmigen Vertiefung (20', 310) der ersten Teilfläche (22', 320) ein vorbestimmtes Teilstück (36, 302, 304) der zweiten umlaufenden rillenförmigen Vertiefung (20", 310') der an die erste Teilfläche (22', 320) angrenzenden zweiten Teilfläche (22", 320') bildet.

4. Vorrichtung nach einem der vorhergehenden Ansprüche, **dadurch gekennzeichnet, dass** der Teilbereich (18) der Oberfläche (14) eine Vielzahl von durch umlaufende rillenförmige Vertiefungen (20, 20', 20", 300, 300', 310, 310") begrenzte Teilflächen (22,22',22", 320, 320") aufweist, die aneinander angrenzen, und bei denen jeweils vorbestimmte Teilstücke (32, 302, 304) der umlaufenden rillenförmigen Vertiefung (20',310) einer Teilfläche (22',320) durch vorbestimmte Teilstücke (36,302,304) der umlaufenden rillenförmigen Vertiefung (20"", 310') einer benachbarten Teilfläche (22", 320') gebildet sind.

5. Vorrichtung nach einem der vorhergehenden Ansprüche, **dadurch gekennzeichnet, dass** die umlaufende rillenförmige Vertiefung (310) durch eine Aneinanderreihung von Streckenabschnitten (302) oder Kurvenabschnitten (304) oder einer Mischung aus Streckenabschnitten (302) und Kurvenabschnitten (304) gebildet ist.

6. Vorrichtung nach Anspruch 5, **dadurch gekennzeichnet, dass** die umlaufende rillenförmige Vertiefung (22") eine Kontur eines Sechsecks (34) aufweist, das mindestens vier jeweils paarweise einander gegenüberliegende im Wesentlichen gleich lange erste Seiten (36) und zwei einander gegenüberliegende im Wesentlichen gleich lange zweite Seiten (38) aufweist.

7. Vorrichtung nach einem der vorhergehenden Ansprüche, **dadurch gekennzeichnet, dass** die umlaufende rillenförmige Vertiefung (20') als ein regelmäßiges Sechseck (30) ausgebildet ist.

8. Vorrichtung nach einem der vorhergehenden Ansprüche, **dadurch gekennzeichnet, dass** eine Tiefe (t, t'), die die umlaufende rillenförmige Vertiefung (20) in den Körper gemessen ab der Oberfläche (14) der angrenzenden Teilfläche (22) eindringt, etwa 0,5 mm bis etwa 15 mm, bevorzugt etwa 2 mm bis etwa 10 mm und besonders bevorzugt etwa 3 mm bis etwa 5 mm ist.

9. Vorrichtung nach einem der vorhergehenden Ansprüche, **dadurch gekennzeichnet, dass** der Körper (12) einen Kern (42) und eine sich zwischen dem Kern (42) und der Oberfläche (14) ersteckende Zwischenschicht (40) mit einer vorbestimmbaren Dicke aufweist, wobei die Zwischenschicht (40) mit der Matrix (26) gefüllt ist.

10. Vorrichtung nach einem der Ansprüche 1 bis 9, **dadurch gekennzeichnet, dass** auf eine Oberseite (41) der sich an der Oberfläche (14) des Körpers (12) erstreckenden Laminatschicht (16) eine zweite Laminatschicht (44') aus einer Fasermatte und einer Matrix laminiert ist, wobei eine Unterseite der zweiten Laminatschicht (44') sich ausschließlich entlang der Oberseite (41) der Laminatschicht (16) der Teilflächen erstreckt, so dass der Oberseite (46') der zweiten Laminatschicht (44') eben ist.

11. Verfahren zur Herstellung einer Vorrichtung mit einer Verstärkung aus einem Faser-Kunststoff-Verbund, insbesondere Surfbrett zum Stand-up paddeling, Wellenreiten, Windsurfen und dergleichen, mit einem Körper aus Kunststoff, wobei der Körper von einer Oberfläche begrenzt ist, an der eine Fasermatte unlösbar verbunden ist, **gekennzeichnet durch**
Aufbringen der Fasermatte auf den durch die Oberfläche begrenzten Körper und anschließend
Ausbilden mindestens einer umlaufenden rillenförmigen Vertiefung mindestens in einem Teilbereich der Oberfläche durch Erwärmen der Oberfläche und Anpressen einer Matrize an den Faser-Kunststoff-Verbund, wobei durch die umlaufende rillenförmige Vertiefung eine vorbestimmte Teilfläche der Oberfläche begrenzt wird.

12. Verfahren nach Anspruch 11, **gekennzeichnet durch** Erhitzen einer Matrize auf eine vorbestimmte Temperatur, wobei die Matrize mindestens eine mit der umlaufenden rillenförmigen Vertiefung korrespondierende Erhöhung aufweist.

13. Verfahren nach Anspruch 12, **dadurch gekennzeichnet, dass** die Matrize alle mit den umlaufenden rillenförmigen Vertiefungen korrespondierende Erhöhungen aufweist.

14. Verfahren nach Anspruch 12 oder 13, **dadurch gekennzeichnet, dass** die vorbestimmte Temperatur der Matrize zwischen etwa 90°C und etwa 220°C, bevorzugt zwischen etwa 120°C und etwa 180°C und besonders bevorzugt zwischen etwa 140°C und etwa 160°C ist.

## Claims

1. Device, in particular a surfboard for stand-up paddling, surfing, windsurfing and the like, having a body of foamed plastics material, wherein the body (12) is delimited by a surface (14) to which a fibre mat is non-releasably connected, **characterized in that** the surface (14) has at least in one sub-region (18) at least one encircling groove-shaped depression (20, 20', 20", 200, 210, 300, 300', 310, 310") by which a predetermined sub-area (22, 22', 22", 220, 222, 224, 320, 320") of the surface (14) is delimited, wherein the groove-shaped depression (20, 20', 20", 200, 210, 300, 300', 310, 310") is formed by heating the surface and pressing a die over the fibre mat into the heated surface of the body (12) in such a way that the fibre mat bears on the full area of the encircling groove-shaped depression (20) and that foamed plastics material has passed at least partially through the fibre mat.

2. Device according to Claim 1, **characterized in that** the first sub-area (22') having the first encircling groove-shaped depression (20') is contiguous to a second sub-area (22") having a second encircling groove-shaped depression (20").

3. Device according to Claim 2, **characterized in that** a predetermined portion (32, 302, 304) of the first encircling groove-shaped depression (20', 310) of the first sub-area (22', 320) forms a predetermined portion (36, 302, 304) of the second encircling groove-shaped depression (20", 310') of the second sub-area (22", 320') that is contiguous to the first sub-area (22', 320).

4. Device according to one of the preceding claims, **characterized in that** the sub-region (18) of the surface (14) has a multiplicity of sub-areas (22, 22', 22", 320, 320") which are delimited by encircling groove-shaped depressions (20, 20', 20", 300, 300', 310, 310") and are mutually contiguous, and in which predetermined portions (32, 302, 304) of the encircling groove-shaped depression (20', 310) of a sub-area (22', 320) are in each case formed by predetermined portions (36, 302, 304) of the encircling groove-shaped depression (20"", 310') of an adjacent sub-area (22", 320').

5. Device according to one of the preceding claims, **characterized in that** the encircling groove-shaped depression (310) is formed by a sequence of straight sections (302) or curved sections (304), or a mixture of straight sections (302) and curved sections (304).

6. Device according to Claim 5, **characterized in that** the encircling groove-shaped depression (22") has a contour of a hexagon (34) which has at least four respective first sides (36) which are of substantially identical length and lie opposite one another in pairs, and two second sides (38) which are of substantially identical length and lie opposite one another.

7. Device according to one of the preceding claims, **characterized in that** the encircling groove-shaped depression (20') is formed as a regular hexagon (30).

8. Device according to one of the preceding claims, **characterized in that** a depth (t, t'), by which the encircling groove-shaped depression (20) penetrates the body when measured from the surface (14) of the adjacent sub-area (22), is approximately 0.5 mm to approximately 15 mm, preferably approximately 2 mm to approximately 10 mm, and particularly preferably approximately 3 mm to approximately 5 mm.

9. Device according to one of the preceding claims, **characterized in that** the body (12) has a core (42) and an intermediate layer (40) which extends between the core (42) and the surface (14) and has a predeterminable thickness, wherein the intermediate layer (40) is filled with the matrix (26).

10. Device according to one of Claims 1 to 9, **characterized in that** a second laminate layer (44') of a fibre mat and a matrix is laminated on an upper side (41) of the laminate layer (16) extending on the surface (14) of the body (12), wherein a lower side of the second laminate layer (44') extends exclusively along the upper side (41) of the laminate layer (16) of the sub-areas in such a way that the upper side (46') of the second laminate layer (44') is flat.

11. Method for producing a device having a reinforcement of a fibre-plastics material composite, in particular a surfboard for stand-up paddling, surfing, windsurfing and the like, having a body of plastics material, wherein the body is delimited by a surface to which a fibre mat is non-releasably connected,
**characterized by**
applying the fibre mat to the body delimited by the surface, and subsequently
forming at least one encircling groove-shaped depression at least in one sub-region of the surface by heating the surface and pressing a die onto the fibre-plastics material composite, wherein a predetermined sub-area of the surface is delimited by the encircling groove-shaped depression.

12. Method according to Claim 11, **characterized by** heating a die to a predetermined temperature, wherein the die has at least one elevation corresponding to the encircling groove-shaped depression.

13. Method according to Claim 12, **characterized in that** the die has all elevations corresponding to the encircling groove-shaped depressions.

14. Method according to Claim 12 or 13, **characterized in that** the predetermined temperature of the die is between approximately 90°C and approximately 220°C, preferably between approximately 120°C and approximately 180°C, and particularly preferably between approximately 140°C and approximately 160°C.

## Revendications

1. Dispositif, en particulier planche de surf pour le stand-up paddle, le surf, la planche à voile et similaire, comprenant un corps en matière plastique moussée, le corps (12) étant délimité par une surface (14) à laquelle une nappe de fibres est reliée de manière inamovible,
**caractérisé en ce que** la surface (14) présente, au moins dans une zone partielle (18), au moins un renfoncement périphérique en forme de rainure (20, 20', 20", 200, 210, 300, 300', 310, 310") délimitant une face partielle prédéterminée (22, 22', 22", 220, 222, 224, 320, 320") de la surface (14), le renfoncement en forme de rainure (20, 20', 20", 200, 210, 300, 300', 310, 310") étant réalisé par chauffage de la surface et par pressage d'un poinçon sur la nappe de fibres dans la surface chauffée du corps (12), de sorte que la nappe de fibres s'appuie contre le renfoncement périphérique en forme de rainure (20) sur toute sa surface, et qu'une matière plastique moussée a traversé au moins partiellement la nappe de fibres.

2. Dispositif selon la revendication 1,
**caractérisé en ce qu'**une deuxième face partielle (22") présentant un deuxième renfoncement périphérique (20") en forme de rainure est adjacente à la première face partielle (22') présentant le premier renfoncement périphérique (20') en forme de rainure.

3. Dispositif selon la revendication 2,
**caractérisé en ce qu'**un tronçon partiel prédéterminé (32, 302, 304) du premier renfoncement périphérique en forme de rainure (20', 310) de la première face partielle (22', 320) forme un tronçon partiel prédéterminé (36, 302, 304) du deuxième renfoncement périphérique en forme de rainure (20", 310') de la deuxième face partielle (22", 320') adjacente à la première face partielle (22', 320).

4. Dispositif selon l'une des revendications précédentes,
**caractérisé en ce que** la zone partielle (18) de la surface (14) présente une pluralité de faces partielles (22, 22', 22", 320, 320") délimitées par des renfoncements périphériques en forme de rainures (20, 20', 20", 300, 300', 310, 310") qui sont adjacentes les unes aux autres et dans lesquelles des tronçons partiels prédéterminés respectifs (32, 302, 304) du renfoncement périphérique en forme de rainure (20', 310) d'une face partielle (22', 320) sont formés par des tronçons partiels prédéterminés (36, 302, 304) du renfoncement périphérique en forme de rainure (20", 310') d'une face partielle voisine (22", 320').

5. Dispositif selon l'une des revendications précédentes,
**caractérisé en ce que** le renfoncement périphérique en forme de rainure (310) est formé par une juxtaposition de tronçons droits (302) ou de tronçons incurvés (304) ou d'un mélange de tronçons droits (302) et de tronçons incurvés (304).

6. Dispositif selon la revendication 5,
**caractérisé en ce que** le renfoncement périphérique en forme de rainure (22") présente le contour d'un hexagone (34) qui présente au moins quatre premiers côtés (36) opposés deux à deux et sensiblement de même longueur et deux deuxièmes côtés (38) opposés et sensiblement de même longueur.

7. Dispositif selon l'une des revendications précédentes,
**caractérisé en ce que** le renfoncement périphérique en forme de rainure (20') est réalisée sous la forme d'un hexagone régulier (30).

8. Dispositif selon l'une des revendications précédentes,
**caractérisé en ce qu'**une profondeur (t, t') de laquelle le renfoncement périphérique en forme de rainure (20) pénètre dans le corps, mesurée à partir de la surface (14) de la face partielle adjacente (22), est d'environ 0,5 mm à environ 15 mm, de préférence d'environ 2 mm à environ 10 mm, et de manière particulièrement préférée d'environ 3 mm à environ 5 mm.

9. Dispositif selon l'une des revendications précédentes,
**caractérisé en ce que** le corps (12) comprend une âme (42) et une couche intermédiaire (40) s'étendant entre l'âme (42) et la surface (14) et ayant une épaisseur prédéfinissable, la couche intermédiaire (40) étant remplie de la matrice (26).

10. Dispositif selon l'une des revendications 1 à 9,
**caractérisé en ce qu'**une deuxième couche stratifiée (44) constituée d'une nappe de fibres et d'une matrice est stratifiée sur une face supérieure (41) de la couche stratifiée (16) s'étendant à la surface (14) du corps (12), et une face inférieure de la deuxième couche stratifiée (44) s'étend exclusivement le long de la face supérieure (41) de la couche stratifiée (16) des faces partielles, de sorte que la face supérieure (46') de la deuxième couche stratifiée (44') est plane.

11. Procédé pour fabriquer un dispositif ayant un renfort en composite fibres-matière plastique, en particulier une planche de surf pour le stand-up paddle, le surf, la planche à voile et similaire, comprenant un corps en matière plastique, ledit corps étant délimité par une surface à laquelle une nappe de fibres est reliée de manière inamovible,
**caractérisé par**
l'application de la nappe de fibres sur le corps délimité par la surface, puis
la formation d'au moins un renfoncement périphérique en forme de rainure au moins dans une zone partielle de la surface par chauffage de la surface et par pressage d'un poinçon contre le composite fibres-matière plastique, une face partielle prédéterminée de la surface étant délimitée par le renfoncement périphérique en forme de rainure.

12. Procédé selon la revendication 11, **caractérisé par** le chauffage d'un poinçon à une température prédéterminée, le poinçon présentant au moins une surélévation correspondant au renfoncement périphérique en forme de rainure.

13. Procédé selon la revendication 12,
**caractérisé en ce que** le poinçon présente toutes les surélévations correspondant aux renfoncements périphériques en forme de rainures.

14. Procédé selon la revendication 12 ou 13,
**caractérisé en ce que** la température prédéterminée du poinçon est comprise entre environ 90 °C et environ 220 °C, de préférence entre environ 120 °C et environ 180 °C, et de manière particulièrement préférée entre environ 140 °C et environ 160 °C.
